Europäisches Patentamt

European Patent Office

Office européen des brevets

(19)

(11) Publication number: **0 084 641**
**B1**

(12) # EUROPEAN PATENT SPECIFICATION

(45) Date of publication of patent specification: **05.11.86**

(51) Int. Cl.⁴: **F 16 B 19/10**

(21) Application number: **82111452.7**

(22) Date of filing: **10.12.82**

(54) Blind fastener assembly.

(30) Priority: **28.12.81 US 334993**

(43) Date of publication of application:
**03.08.83 Bulletin 83/31**

(45) Publication of the grant of the patent:
**05.11.86 Bulletin 86/45**

(84) Designated Contracting States:
**DE FR GB IT SE**

(56) References cited:
**DE-A-1 750 818**
**DE-B-1 475 227**
**US-A-3 657 955**
**US-A-4 033 222**

(73) Proprietor: **SPS TECHNOLOGIES, INC.**
**Newtown Pennsylvania 18940 (US)**

(72) Inventor: **Kull, Richard J.**
**800 Bluebell Rd.**
**Warminster, PA 18974 (US)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

This invention relates to a blind fastener assembly according to the preamble of claim 1.

Advanced composite materials have recently been gaining increasing usage in various aerospace applications because they offer potential weight savings and increased stiffness. The anisotropic properties of composite materials present a unique opportunity to optimize certain structural designs such as elongated aircraft stringers and ribs. In order to form acceptable joints of relatively thin sheet composite materials, conventional blind fasteners have not proven to be completely acceptable.

One reason is the low allowable bearing stress of composite materials which means that the full tensile strength of the blind fastener may not be realized because of bearing failure of the composite material. Present blind fasteners have a relatively limited blind side bearing area and typically expand to approximately 1.3 times the original sleeve diameter. Another reason is that composite materials are weaker in shear, thus causing any holes to require greater edge distances and more area buildup to develop full efficiency of the composite material.

Advanced composite materials are constructed of a resin matrix which has a tendency to crack when holes in the material are expanded, such as by cold working or by an interference fit fastener. Rivets which swell when upset may also crack the resin matrix. Finally, fasteners which form against the blind side composite material surface tend to damage the relatively soft material surface by digging or gouging out some of the material during the bearing surface formation process. Additionally, fasteners which form against the blind side composite material surface may cause stress concentrations, during the formation process, which exceed the compressive strength of such materials, thus causing damage.

In a known blind fastener assembly (US—A—4 033 222) a plurality of sleeves made of a ductile material is arranged along the shank portion of the pin member. The sleeves expand sequentually and slide within each other so that finally the annular front faces of all sleeves provided bear against the workpiece surface. In another embodiment the front edge of the innermost sleeve is bent outwardly and backwardly and is supported by the front end of the outer expanded sleeve. The expansion and deformation of all sleeves provided cannot be precisely controlled and predetermined so that the contact pressures of the front edges of all sleeves provided can be different and locally too high. This is disadvantageous for advanced composite material workpieces with low allowable bearing stress.

In a blind fastener assembly known from US—A—3 657 955 an expandable split ring forms an abutting means. When expanded both ends of the ring are aligned with a considerable circumferential distance therebetween. The practical effect thereof is a lack of full bearing of the split ring on the blind side surface of the workpieces and the probability of edge crushing at the intersection between the bore and the blind side surface of the workpieces during service life. This probability is greatly enhanced when composite materials are used. Furthermore, a proper function is jeopardized since the expansion of reduced diameter portions of a rear sleeve caused by a buckling effect cannot be controlled precisely enough in order to avoid that the head of the sleeve penetrates into the split ring which then can slide away.

It is a main object of the invention to provide a blind fastener assembly with a large and continuous bearing surface on the blind side of the workpieces and a uniform bearing load on the delicate surface of the workpieces.

It is a further object to provide an improved blind fastener assembly for use with composite materials.

It is yet another object of the present invention to provide an improved blind fastener assembly which forms away from the blind side workpiece surface.

It is still another object to provide a blind fastener assembly in which the formation of the blind side bearing surface is not sensitive to variations in grip length.

It is yet a further object of the present invention to provide an improved blind fastener assembly which does not expand the holes in the workpieces in which it is installed.

It is another object of the invention to provide a blind fastener assembly in which the blind side bearing surface will conform to an irregular contour of the blind side workpiece surface.

And, it is an object of the present invention to provide a blind fastener assembly which is expandable to approximately 1.4 times its unexpanded diameter.

The main object can be achieved with a blind fastener assembly according to the characterizing clause of claim 1.

The coil spring is positioned about or is carried on the pin member shank portion, either in a groove or on the full diameter of the pin member shank portion. The expander includes a shank portion, the outside diameter of which is substantially equal to the aligned bores in the workpieces. The coil spring expands during the installation sequence over the tapered nose portion on to full diameter of the shank portion until it is clamped against the blind side surface and abuts the blind side surface of the workpieces. It abuts with an annular bearing surface and over the whole radial extent of the bearing surface on the blind side surface of the workpiece. Since the inner diameter of the expanded coil spring exactly corresponds to the outer diameter of the shank portion of the expander, no serious interruption in the bearing surface occurs, since the stretched length of the expanded coil spring can be exactly matched with the circumferential length of the shank portion. The shank portion of the expander has substantially the same outer diameter as the inner diameter of the bores so that the inner diameter of the expanded coil spring flushes with the inner diameter of the bores.

Advantageous embodiments of the invention are indicated with the depending claims.

The invention will become apparent upon reading the following detailed description and upon reference to the drawings in which like numerals refer to like parts and in which:

Fig. 1 is a cross sectional view, with parts in elevation, illustrating a first embodiment of a blind fastener assembly installed in a pair of workpieces prior to any forming operation.

Fig. 2 shows the embodiment of Fig. 1 in a first intermediate position.

Fig. 3 shows the embodiment of Fig. 1 in a second intermediate position, showing the coil spring in a partially expanded condition on the pin.

Fig. 4 shows the embodiment of Fig. 1 in a third intermediate position with the sleeve partially expanded and the coil spring positioned on the tapered nose portion of the expander.

Fig. 5 shows the embodiment of Fig. 1 in a fourth intermediate position, with the sleeve partially expanded and the coil spring fully expanded prior to contacting the blind side workpiece surface.

Fig. 6 shows the embodiment of Fig. 1 in a finally formed condition with the coil spring abutting the blind side workpiece surface.

Fig. 7 shows a side elevation view of one embodiment of a coil spring.

Fig. 8 shows a second embodiment of a coil spring having tapered ends.

Fig. 9 shows the coil spring illustrated in Fig. 8 having chamfered interior edges.

Fig. 10 shows a second embodiment of a pin having a breakneck groove formed therein.

Fig. 11 shows a second embodiment of a sleeve having a chamfered interior edge.

Fig. 12 is a cross sectional view with parts in elevation, illustrating a second embodiment of a blind fastener assembly.

Fig. 13 shows the embodiment of Fig. 12 in a first intermediate position, showing the coil spring abutting the tapered nose portion of the expander.

Fig. 14 shows the embodiment of Fig. 12 in a second intermediate position, showing the coil spring fully expanded in a finally formed condition with the coil spring abutting the blind side workpiece surface.

Fig. 15 is an alternate version of the embodiment shown in Fig. 12 without the extended nose portion of the expander, showing the coil spring frictionally engaged between the expander tapered nose portion and the sleeve.

Fig. 16 is an alternate version of a sleeve which may be used with the embodiment shown in Figs. 12 to 14.

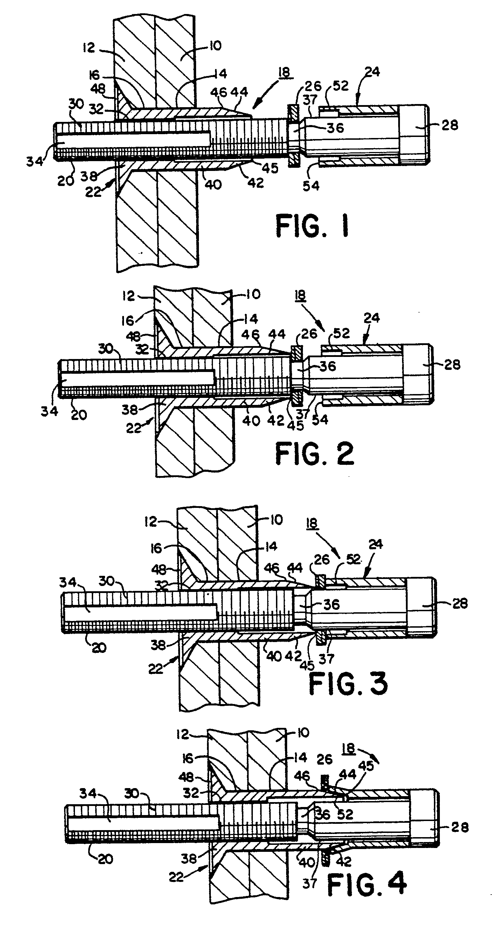

Referring to Figs. 1 through 6, a first embodiment of a blind fastener assembly is shown in varying stages of installation. Workpieces 10 and 12 which have aligned holes 14 and 16 are shown with a blind fastener assembly 18 passing therethrough. The fastener assembly 18 includes a pin member 20, an expander 22, a sleeve 24, and an expandable abutting means, namely a coil spring 26. The pin member 20 has an enlarged head 28 at one end thereof and may, in one configuration, include standard external threads 30 which are designed to engage mating threads 32 on expander 22. Appropriate rotation of the pin 20 with respect to expander 22 will draw the head 28 of the pin toward workpieces 10 and 12, also drawing sleeve 24, which is carried on the shank of pin 20 adjacent to head 28, toward expander 22. In the particular embodiment shown, a wrenching configuration such as a pair of flats 34 are included on pin 20 for accepting a tool driving bit. It should be understood that pin 20 may include a plurality of circumferential grooves (not shown) instead of external threads 30 and mating threads 32 on expander 22. Such grooves are commonly employed on similar pulling pin devices and are formed to be gripped by any one of a number of conventional pull-type guns for exerting the necessary axial force on pin 20. This arrangement is not illustrated because is is quite conventional and fully known to those skilled in the art.

Pin 20 includes a groove 36 in its shank. Positioned in the groove is coil spring 26 which is formed to be radially expandable. Adjacent groove 36 is a shank portion 37 on the outside diameter of the pin.

Expander 22 includes an enlarged head 38 which bears on the workpiece surface, a first shank portion 40 of constant outside diameter which extends through aligned openings 14 and 16 in workpieces 10 and 12, and a nose portion 42 on the end opposite its head 38 having a tapered surface 44. Tapered surface 44 forms an angle on the order of approximately 20° with the longitudinal axis of expander 22, but may generally be within the range of about 15° to 30°. The intersection line between shank portion 40 and tapered surface 44 will be designated as 46, and the forward end of nose portion 42 will be designated as 45.

The head 38 of expander 22 may include a slot 48 for accepting a portion of the power tool bit (not shown) to keep expander 22 from rotating with respect to workpieces 10 and 12, during the assembly of the joint. It is to be understood that head 38 may be of any configuration while still remaining within the scope of the present invention.

An end 54 of sleeve 24 which faces workpiece 10 has a counter-bore or area of increased interior radius 52 along an axial portion of the sleeve. As will be subsequently described, the gap which is formed between pin shank 37 and counter-bored region 52 of sleeve 24 is adapted to receive end 45 and tapered surface 44 of expander 22.

During installation of fastener assembly 18, pin 20 is caused to move axially so as to draw head 28 of pin 20 toward expander 22 and, hence, workpieces 10 and 12. Such movement is caused when an axial force is exerted on pin 20 by exerting a torque on pin 20 or by pulling on pin 20 by means of a pull-gun (not shown). Referring to Fig. 2, as the pin is advanced through workpieces 10 and 12, coil spring 26 is brought into contact with end 45 of the expander nose portion 42. Continued advancement of pin 20 causes nose portion 42 of expander 32 to force coil spring 26 out of groove 36 and onto shank 37 of pin 20. This necessarily results in a partial radial expansion of coil spring 26.

As is shown in Fig. 3, continued advancement of pin 20 causes the coil spring to become sandwiched between end 45 of the expander nose portion 42 and end 54 of sleeve 24.

As is shown in Fig. 4, coil spring 26 is radially expanded again as it is forced onto inclined surface 44 of expander nose portion 42 during further advancement of head 28 toward workpieces 10 and 12. The coil spring is forced to expand onto tapered surface 44 by end 45 wedging between shank 37 and the inside diameter surface of coil spring 26. Once the coil spring is expanded, end 45 advances into the gap between pin shank 37 and counter-bored region 52 of sleeve 24, causing the sleeve to expand and advance along tapered surface 44. The coil spring 26 is fully expanded after it passes intersection line 46.

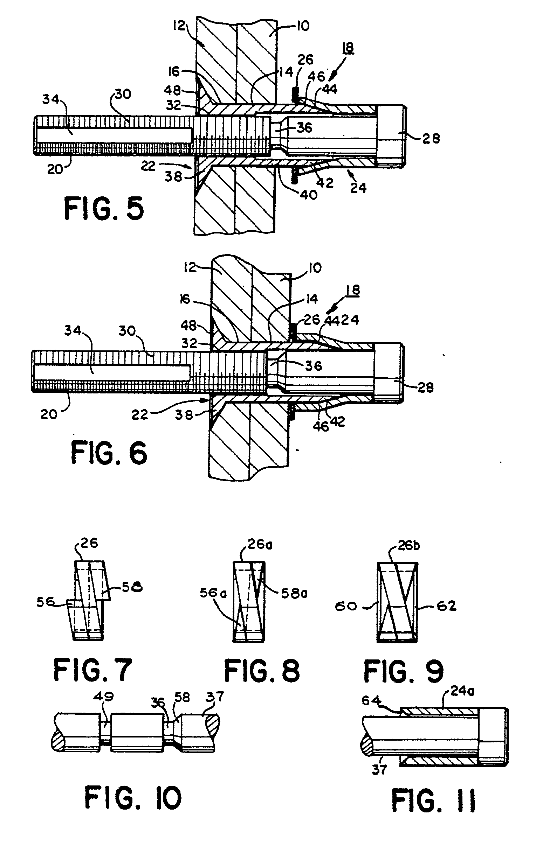

Continued movement of head 28 and sleeve 24 toward the workpieces causes coil spring 26 also to move toward the workpieces, resulting in further advancement of the expander nose portion 42 between sleeve 24 and pin shank 37, as is shown in Fig. 5. The coil spring is ultimately caused to seat against the surface of workpiece 10, as is shown in Fig. 6. Advancement of pin 20 through the workpieces is continued subsequent to the seating of coil spring 26 against workpiece 10, until the desired preload is reached. Thereupon, the pin fractures at a separate breakneck groove 49, which may be provided, as shown in Fig. 10. It should be understood that some form of locking configuration (not shown) may be provided between pin 20 and expander 22 to keep the pin from moving in an axial direction after the joint is formed, and to maintain the desired preload in the joint. Examples of such a locking configuration could be a prevailing torque feature between the mating threads or any one of the numerous known conventional locking features.

The blind fastener assembly 18 of the present invention has been designed to work reliably and consistently with workpieces which are constructed of advanced composite materials. Advanced composite materials generally have a compressive strength limit within the range of 15,000 to 30,000 psi. Steady state clamping loads, or preloads, for joints of advanced composite materials are generally desired to be of an order of magnitude of approximately 10,000 psi. It is therefore desirable for the surface which is to form the bearing surface on the blind side of such a joint assembly to be formed without requiring contact with the advanced composite material.

The present invention provides a member having such a bearing surface by causing the coil spring 26 to become fully expanded prior to its contacting the surface of workpiece 10. (1 psi $\triangleq$ 6895 N/m$^2$)

One form of coil spring 26 is shown in Fig. 7 and is formed in the shape of a helical spring having two turns. While a coil spring having two turns is shown, it should be understood that more or less than two turns could be used. The spring is designed so that when it is fully expanded, there will be no overlap of ends 56 and 58, thus presenting a flat bearing surface to the blind side of the workpiece. Another embodiment of the coil spring 26a, is shown in Fig. 8 wherein ends 56a and 58a are tapered so that when coil spring 26a is fully expanded, the tapered end portions will overlap, forming a splitwasher having uniform thickness. This is desirable since a flatter surface will be presented to the blind side workpiece surface, thereby reducing or eliminating any stress concentrations which might otherwise be produced in the advanced composite material. Coil spring 26a depicted in Fig. 8 is shown in Fig. 9 as 26b with chamfered edges 60 and 62 formed on its interior end faces. Chamfered edges 60 and 62 permit coil spring 26b to more easily slide out of groove 36 in pin 20 during installation, and thereafter to more easily permit end 45 of expander nose portion 42 to force itself between coil spring 26 and pin shank 37. The chamfered edges 60 and 62 may also be formed on the coil spring shown in Fig. 7.

The shank portion 37 of pin 20 is shown in Fig. 10 with an optional breakneck groove 49. Breakneck groove 49 is formed in the pin so as to cause it to fracture when the desired preload is reached. Groove 36 is shown having an inclined face 58, which permits coil spring 26 to be more easily expanded and forced out of groove 36.

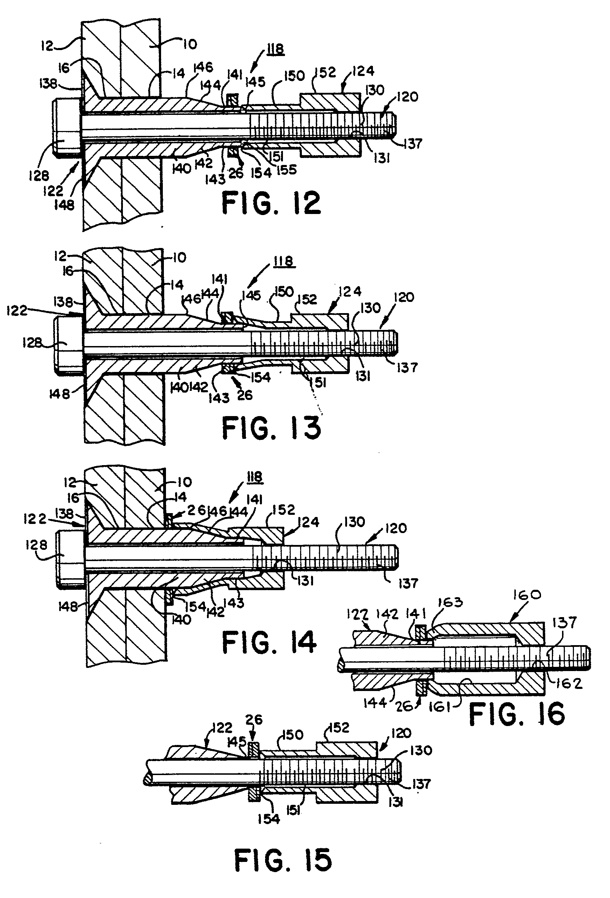

Another embodiment of the sleeve 24a is shown in Fig. 11 in which counter-bore 52 is eliminated and replaced with a chamfered edge 64 on its interior radius on the end facing the blind side workpiece surface. The void region formed by chamfered edge 60 serves the same purpose as counter-bored region 52 (as shown in Figs. 1 through 3) in that it permits expander nose portion 42 to more easily be forced between sleeve 24a and pin shank 37 so as to cause the sleeve to expand and advance along tapered surface 44.

Heretofore, the blind fastener assembly 18 has been described as being particularly well-suited for use with advanced composite materials. It should be understood that it can also be used with conventional materials with equally effective results.

A second embodiment is shown in Figs. 12 through 14. As previously indicated, the primary difference between the two embodiments is that the orientation of the pin is reversed so that the head is on the accessible side in the second embodiment. Additionally, the sleeve threadably engages the pin in the second embodiment, whereas the expander threadably engages the pin in the first embodiment. The fastener assembly 118 includes a pin member 120, an expander 122, a sleeve 124, and the expandable coil spring 26. The pin member 120 has an enlarged head 128 at one end thereof and includes standard external threads 130 which are designed to engage mating threads 131 on sleeve 124. Appropriate rotation of the head 128 of pin 120 with respect to expander 122 will draw sleeve 124 toward workpieces 10 and 12 and expander 122.

Expander 122 includes an enlarged head 138 which bears on the workpiece surface, a first shank portion 140 of constant outside diameter which extends through aligned openings 14 and 16 in workpieces 10 and 12, and a nose portion 142 on the end opposite its head 138 having a tapered surface 144. Tapered surface 144 forms an angle on the order of approximately 20° with the longitudinal axis of expander 122, but may generally be within the range of about 15°—30°. The intersection line between shank portion 140 and tapered surface 144 will be designated as 146. Protruding from the tapered nose portion 142 of expander 122 is an extended cylindrical portion 141 having an outer surface 143 and a forward end 145.

As in the first embodiment, the head 138 of expander 122 may include a slot 148 for accepting a portion of a power tool kit (not shown) to keep expander 122 from rotating with respect to workpieces 10 and 12, during the assembly of the joint. It is to be understood that head 138 may be of any configuration while still remaining within the scope of the present invention.

The expandable coil spring 26 is slidably mounted about pin member 120 on the extended portion 141 of expander 122.

An end 154 of sleeve 124 which faces workpiece 10 has a counter-bore or area of increased interior radius 151 along an axial portion of the sleeve and a chamfered region 155. As will be subsequently described, the gap which is formed between pin shank 137 and counterbored region 151 of sleeve 124 is adapted to receive end 145, surface 141, and tapered surface 144 of expander 122.

Prior to installation of fastener assembly 118, the components are assembled as shown so that end 145 of expander 122 frictionally engages end 154 of sleeve 124. Such frictional engagement is necessary so that sleeve 124 will not rotate, and therefore will advance, upon rotation of pin 120.

During installation of fastener assembly 118, pin 120 is caused to rotate so as to draw sleeve 124 toward expander 122 and, hence, workpieces 10 and 12. Such movement is caused by exerting a torque on the pin, as previously described. Referring to Fig. 13, the sleeve 124 is advanced toward tapered nose portion 142 expanding over end 145 and extended portion 141 of the expander sliding coil spring 26 over extended portion 141.

As is shown in Fig. 14, coil spring 26 is radially expanded as it is forced onto the inclined surface 144 of expander nose portion 142 during further advancement of sleeve 124 toward workpieces 10 and 12. The coil spring is forced to expand onto tapered surface 144 by the end 154 of sleeve 124. The coil spring 26 is fully expanded after it passes intersection line 146. Continued rotation of head 128 and movement of sleeve 124 toward the workpieces causes coil spring 26 to continue to move toward the workpieces.

The coil spring is ultimately caused to seat against the surface of workpiece 10, as is shown in Fig. 14. Advancement of the sleeve 124 toward the workpieces is continued subsequent to the seating of coil spring 26 against workpiece 10, until the desired preload is reached, as determined by a conventional torque wrench.

As shown in Figs. 12 through 14, sleeve 124 has a region of reduced outer diameter 150 and a region of increased diameter 152. The region of reduced diameter 150 facilitates the expansion of that region as it is forced to expand over the extended nose portion 141 and tapered nose portion 142 of expander 122. The region 152 of increased diameter provides structural support for the interior threaded region 131 of sleeve 124 which engage pin 120.

This second embodiment of the invention is illustrated as having extended nose portion 141, upon which coil spring 26 is positioned. In another version of the second embodiment extended portion 141 may be eliminated, as is shown in Fig. 15. In this version coil spring 26 is frictionally engaged between end 145 of expander 122 and end 154 of sleeve 124.

An alternate version of a sleeve for use with the embodiment shown in Figs. 12 to 14 is shown in Fig. 16. Sleeve 160 is shown mounted on pin shank 137 and frictionally engaged with expander 122. The sleeve has a region of increased interior diameter 161 and threads 162 which engage mating threads on pin shank 137. The end of the sleeve facing the blind side of the assembly is pinched or crimped so as to deform and create a region of reduced interior diameter 163 which is adapted to frictionally engage extended portion 141 of expander 122. Such deformation may be performed on two opposing locations, or as in the preferred embodiments, be performed on three locations.

Both versions of the second embodiment may use the various configurations of coil spring 26 which have been previously described and which are shown in Figs. 7 through 9.

The first embodiment is desirable for those applications wherein maximum bearing surface area is desired, as provided by coil spring 26. The first embodiment provides for a greater degree of expansion of the coil spring as it has a smaller initial interior diameter resulting from the fact that it is initially seated in the groove in the pin. However, for most applications the second embodiment will be satisfactory. The second embodiment has certain manufacturing advantages resulting from the elimination of the groove in the pin, the lack of a requirement to place interior threads on the expander which is generally con-

**0 084 641**

structed of titanium, and, in general, a wider permissable range of manufacturing tolerances.

**Claims**

1. A blind fastener assembly (18, 118), adapted to be installed in an opening (14, 16) of a workpiece (10, 12) having a first and a second surface, comprising:

a pin member (20, 120) including a shank portion and an enlarged head (28, 128) at one end thereof;

expander means (22, 122) including an enlarged head (38, 138) at one end thereof formed to bear against the first surface of the workpiece (10, 12), a tapered nose portion (44, 144) at the other end thereof, and a shank portion (40, 140) therebetween, said expander means being adapted to fit into the opening (14, 16) in the workpiece (10, 12), and having a bore therethrough adapted to receive the shank portion of the pin member (20, 120);

expandable abutting means (26, 26a, 26b) positioned about the shank portion between the expander means nose portion (42, 142) and the end of the pin member (20, 120), said abutting means being adapted to fit through the opening (14, 16) in its unexpanded state; and

expandable sleeve means (24, 124, 160) carried on the shank portion between the abutting means (26, 26a, 26b) and the end of the pin member (20, 120) and adapted to force the abutting means to expand by forcing it over the tapered nose portion (44, 144) until it contacts and bears against the second surface of the workpiece (10, 12) with an annular abutting surface, said sleeve means being operably engaged with the pin member (20, 120) so that the pin member causes the sleeve means to abut the abutting means and advance toward the workpiece, characterized in that the expandable abutting means is a coil spring (26, 26a, 26b) which unwinds as it is expanded until its ends (56, 58, 56a, 58a) are aligned in circumferential direction.

2. Assembly according to claim 1, characterized in that the ends (56a, 58a) of the coil spring (26a, 26b) are tapered and that the tapered ends overlap upon complete expansion of the coil spring.

3. Assembly according to claims 1 and 2, characterized in that the head (128) of the pin member (120) abuts the head (138) of the expander means (122) and that the pin member (120) is threadably engaged with the sleeve means (124, 160) so that rotation of the pin member causes advancement of the sleeve means (124, 160) toward the second surface of the workpiece thereby causing expansion of the coil spring (26, 26a, 26b).

4. Assembly according to claims 1 and 2, characterized in that the pin member shank portion is formed with a first circumferential groove (36) between the expander means nose portion (44) and the sleeve means (24) which is adapted to carry the coil spring (26, 26a, 26b) in its unexpanded state.

5. Assembly according to claim 4, characterized in that the groove (36) includes a surface (58) sloping toward the end of said pin member (20) which passes through the workpiece opening to facilitate the removal and expansion of the coil spring (26, 26a, 26b) from said first groove (36).

6. Assembly according to claim 5, characterized in that the coil spring (26, 26a, 26b) has a chamfered interior edge (60, 62) adjacent the sloping surface to facilitate removal of the spring from the first groove (36).

7. Assembly according to claims 1 or 2, characterized in that the head (28) of the pin member (20) is positioned on the side of the workpiece second surface, that the pin member (20) is adapted to be advanced through the expander means (22) thereby causing the head (28) of the pin member (20) to force the sleeve means (24) against the coil spring (26, 26a, 26b) and advance it toward the workpiece second surface.

8. Assembly according to claim 7, characterized in that the pin member (20) is slidably engaged with said expander means (22) so that said pin member may be pulled to cause said advancement.

9. Assembly according to claim 7 wherein said pin member (20) is threadably (thread 30, 32) engaged with said expander means (22) so that rotation of said pin member will cause said advancement.

10. Assembly according to claims 1 or 2, characterized in that the end of the sleeve means (24, 124, 160) facing the workpiece second surface has a recessed region (52, 151, 161, 163) proximate the pin member shank portion to facilitate engagement and expansion thereof by the expander means tapered nose portion (44, 144).

11. Assembly according to claim 10, characterized in that the recessed region is a chamfered surface (64).

12. Assembly according to claim 10, characterized in that the recessed region (52, 151, 161) is a counter-bored portion in the sleeve means (24, 124, 160).

13. Assembly according to claim 12, characterized in that the end of the sleeve means (24, 124) having the counter-bored region has a chamfered surface (154).

14. Assembly according to claim 10, characterized in that the sleeve means (124, 160) includes a region (152) of increased outer diameter about the region thereof having threads (131, 162) which engage the pin member (120).

15. Assembly according to claim 1, characterized in that the pin member further includes a second groove (49) in the shank portion (37) thereof designed to break at a predetermined load.

**Patentansprüche**

1. Blind-Niet-Vorrichtung (18, 118), die in einer Öffnung (14, 16) eines Werkstückes (10, 12) anbringbar ist, das eine erste und eine zweite Oberfläche besitzt, wobei die Blind-Niet-Vorrichtung besteht aus:

einem Zapfenglied (20, 120) mit einem Schaftabschnitt und einem vergrößerten Kopf (28, 128) an einem Ende desselben;

Expander-Mitteln (22, 122) mit einem vergrößerten Kopf (38, 138) an einem Ende derselben, der so ausgebildet ist, daß er gegen die erste Oberfläche des Werkstückes (10, 12) anlegbar ist, mit einem kegelförmigen Nasenabschnitt (44, 144) am anderen Ende derselben, und mit einem dazwischenliegenden Schaftabschnitt (40, 140), wobei die Expander-Mittel so ausgebildet sind, daß sie in die Öffnung (14, 16) des Werkstückes (10, 12) passen und eine durchgehende Bohrung aufweisen, die zur Aufnahme des Schaftabschnittes des Zapfengliedes (20, 120) ausgebildet ist;

expandierbaren Anlage-Mitteln (26, 26a, 26b), die um den Schaftabschnitt zwischen dem Nasenabschnitt (42, 142) der Expander-Mittel und dem Ende des Zapfengliedes (20, 120) um den Schaftabschnitt positioniert und so ausgebildet sind, daß sie in nicht expandiertem Zustand durch die Öffnung (14, 16) des Werkstückes passen; und

ausdehnbaren Hülsen-Mitteln (24, 124, 160), die auf dem Schaftabschnitt zwischen den Anlage-Mitteln (26, 26a, 26b) und dem Ende des Zapfengliedes (20, 120) getragen werden und derart ausgebildet sind, daß sie die Anlage-Mittel dadurch zum Expandieren zwingen, daß sie über den kegeligen Nasenabschnitt (40, 144) gezwungen werden, bis sie die zweite Oberfläche des Werkstückes (10, 12) mit einer ringförmigen Anlage-Fläche berühren und dagegen drücken, wobei die Hülsen-Mittel mit dem Zapfenglied (20, 120) derart in Wirkungsverbindung stehen, daß das Zapfenglied die Hülsen-Mittel zur Anlage an den Anlage-Mitteln bringt und diese in Richtung auf das Werkstück vorwärts schiebt, dadurch gekennzeichnet, daß die expandierbaren Anlage-Mittel eine Spiralfeder (26, 26a, 26b) sind, die sich beim Expandieren aufdreht, bis ihre Enden (56, 58, 56a, 58a) in Umfangsrichtung ausgerichtet sind.

2. Blind-Niet-Vorrichtung nach Anspruch 1, dadurch gekennzeichnet, daß die Enden (56a, 58a) der Spiralfeder (26a, 26b) angeschrägt sind und daß sich die angeschrägten Enden nach vollständiger Expansion der Spiralfeder überlappen.

3. Blind-Niet-Vorrichtung nach den Ansprüchen 1 und 2, dadurch gekennzeichnet, daß der Kopf (128) des Zapfengliedes (120) am Kopf (138) der Expander-Mittel (122) anliegt, und daß das Zapfenglied (120) in den Hülsen-Mitteln (124, 160) mittels einer Gewindeverbindung eingreift, so daß eine Verdrehung des Zapfengliedes ein Vorwärtsschieben der Hülsen-Mittel (124, 160) in Richtung zur zweiten Oberfläche des Werkstückes unter Expansion der Spiralfeder (26, 26a, 26b) bewirkt.

4. Blind-Niet-Vorrichtung nach den Ansprüchen 1 und 2, dadurch gekennzeichnet, daß der Schaftabschnitt des Zapfengliedes zwischen dem Nasenabschnitt (44) der Expander-Mittel und den Hülsen-Mitteln (24) mit einer ersten Umfangsnut (36) ausgestattet ist, die derart ausgebildet ist, daß sie die Spiralfeder (26, 26a, 26b) in ihrem nicht expandiertem Zustand aufnimmt.

5. Blind-Niet-Vorrichtung nach Anspruch 4, dadurch gekennzeichnet, daß die Umfangsnut (36) eine in Richtung zum durch die Öffnung des Werkstückes passenden Ende des Zapfengliedes (20) ansteigende Fläche (58) aufweist, die das Expandieren und das Heraustreten der Spiralfeder (26, 26a, 26b) aus der ersten Umfangsnut (36) erleichtert.

6. Blind-Niet-Vorrichtung nach Anspruch 5, dadurch gekennzeichnet, daß die Spiralfeder (26, 26a, 26b) einen abgeschrägten inneren Rand (60, 62) benachbart zur ansteigenden Fläche (58) aufweist, der das Heraustreten der Spiralfeder aus der ersten Umfangsnut (36) erleichtert.

7. Blind-Niet-Vorrichtung nach den Ansprüchen 1 oder 2, dadurch gekennzeichnet, daß der Kopf (28) des Zapfengliedes (20) an der der zweiten Werkstück-Oberfläche zugehörigen Seite positioniert ist, daß das Zapfenglied (20) so ausgebildet ist, daß es durch die Expander-Mittel (22) vorwärtsbewegbar ist, um die Hülsen-Mittel (24) durch den Kopf (28) des Zapfengliedes (20) gegen die Spiralfeder (26, 26a, 26b) zu drücken und diese in Richtung auf die zweite Oberfläche des Werkstückes vorwärtszuschieben.

8. Blind-Niet-Vorrichtung nach Anspruch 7, dadurch gekennzeichnet, daß das Zapfenglied (20) in die Expander-Mittel (22) verschiebbar eingreift, derart, daß das Zapfenglied zum Bewirken der Vorschiebebewegung gezogen werden kann.

9. Blind-Niet-Vorrichtung nach Anspruch 7, dadurch gekennzeichnet, daß das Zapfenglied (20) mit einer Gewinde-Verbindung (Gewinde 30, 32) in die Expander-Mittel (22) eingreift, derart, daß eine Verdrehung des Zapfengliedes die Vorschiebebewegung bewirkt.

10. Blind-Niet-Vorrichtung nach den Ansprüchen 1 oder 2, dadurch gekennzeichnet, daß das der zweiten Oberfläche des Werkstückes zugewandte Ende der Hülsen-Mittel (24, 124, 160) eine vertiefte Zone (52, 151, 161, 163) aufweist, die nahe dem Schaftabschnitt des Zapfengliedes liegt und das Angreifen des kegeligen Nasenabschnittes (44, 144) der Expander-Mittel zum Expandieren der Hülsen-Mittel erleichtert.

11. Blind-Niet-Vorrichtung nach Anspruch 10, dadurch gekennzeichnet, daß die vertiefte Zone eine abgeschrägte Fläche (64) aufweist.

12. Blind-Niet-Vorrichtung nach Anspruch 10, dadurch gekennzeichnet, daß in der vertieften Zone (52, 151, 161) ein Ansenk-Bohrungsabschnitt in den Hülsen-Mitteln (24, 124, 160) vorgesehen ist.

13. Blind-Niet-Vorrichtung nach Anspruch 12, dadurch gekennzeichnet, daß das mit dem Ansenk-Bohrungsabschnitt ausgestattete Ende der Hülsen-Mittel (24, 124) eine abgeschrägte Fläche (154) aufweist.

14. Blind-Niet-Vorrichtung nach Anspruch 10, dadurch gekennzeichnet, daß an den Hülsen-Mitteln (124, 160) eine Zone (152) mit vergrößertem Außendurchmesser vorgesehen ist, und daß im Erstreckungsbereich der Zone (152) Gewinde (131, 162) vorgesehen sind, mit denen das Zapfenglied (120) in Eingriff steht.

15. Blind-Niet-Vorrichtung nach Anspruch 1, dadurch gekennzeichnet, daß das Zapfenglied eine zweite Nut (49) in seinem Schaftabschnitt (37) aufweist, die so ausgebildet ist, daß der Schaftabschnitt (37) bei einer vorbestimmten Belastung bricht.

**Revendications**

1. Ensemble de rivet aveugle (18, 118) adapté pour être installé dans une ouverture (14, 16) d'une pièce (10, 12) présentant une première et une seconde surfaces, comportant:

un élément en forme de tige (20, 120) comprenant une partie de queue et une tête élargie (28, 128) à l'une de ses extrémités;

un moyen expanseur (22, 122) comprenant une tête élargie (38, 138) à l'une de ses extrémités, formée pour porter contre la première surface de la pièce (10, 12), une partie de nez conique (44, 144) à son autre extrémité, et une partie de queue (40, 140) entre elles, ledit moyen expanseur étant adapté pour se loger dans l'ouverture (14, 16) de la pièce (10, 12) et présentant un alésage qui le traverse et qui est adapté pour recevoir une partie de queue de l'élément en forme de tige (20, 120);

un moyen de butée élargissable (26, 26a, 26b) disposé autour de la partie de queue entre la partie de nez (42, 142) du moyen expanseur et l'extrémité de l'élément en forme de tige (20, 120), ledit moyen de butée étant adapté pour se disposer dans l'ouverture (14, 16) dans son état non élargi; et

un moyen à manchon élargissable (24, 124, 160) supporté sur la partie de queue entre le moyen de butée (26, 26a, 26b) et l'extrémité de l'élément en forme de tige (20, 120) et adapté pour forcer le moyen de butée à s'élargir en le refoulant sur la partie de nez conique (44, 144) jusqu'à ce qu'il vienne en contact et porte contre la seconde surface de la pièce (10, 12) par une surface de butée annulaire, ledit moyen de manchon étant en engagement fonctionnel avec l'élément en forme de tige (20, 120) de manière que l'élément en forme de tige amène le moyen à manchon à venir buter contre le moyen de butée et avancer en direction de la pièce,

caractérisé en ce que le moyen de butée élargissable est un ressort à boudin (26, 26a, 26b) qui se déroule quand il s'élargit jusqu'à ce que ses extrémités (56, 58, 56a, 58a) soient en alignement en direction circonférentielle.

2. Ensemble selon la revendication 1, caractérisé en ce que les extrémités (56a, 58a) du ressort à boudin (26, 26a, 26b) sont effilées et en ce que les extrémités effilées se chevauchent lors de l'élargissement complet du ressort à boudin.

3. Ensemble selon les revendications 1 et 2, caractérisé en ce que la tête (128) de l'élément en forme de tige (120) vient buter contre la tête (138) du moyen expanseur (122) et en ce que l'élément en forme de tige (120) peut être vissé dans le moyen à manchon (124, 160) de manière que la rotation de l'élément en forme de tige provoque l'avance du moyen à manchon (124, 160) en direction de la seconde surface de la pièce, déter-

minant ainsi l'élargissement du ressort à boudin (26, 26a, 26b).

4. Ensemble selon les revendications 1 et 2, caractérisé en ce que la partie de queue de l'élément en forme de tige comprend une première gorge circonférentielle (36) entre la partie de nez (44) du moyen expanseur et le moyen à manchon (24), qui est adaptée pour supporter le ressort à boudin (26, 26a, 26b) dans son état non élargi.

5. Ensemble selon la revendication 4, caractérisé en ce que la gorge (36) comprend une surface (58) en pente en direction de l'extrémité de l'élément en forme de tige (20) qui passe au travers de l'ouverture de la pièce pour faciliter le retrait et l'élargissement du ressort à boudin (26, 26a, 26b) à partir de ladite première gorge (36).

6. Ensemble selon la revendication 5, caractérisé en ce que le ressort à boudin (26, 26a, 26b) comprend un bord intérieur chanfreiné (60, 62) adjacent à la surface en pente pour faciliter le retrait du ressort de la première gorge (36).

7. Ensemble selon la revendication 1 ou 2, caractérisé en ce que la tête (28) de l'élément en forme de tige (20) est disposée sur le côté de la seconde surface de la pièce et en ce que l'élément en forme de tige (20) est adapté pour être avancé au travers du moyen expanseur (22), amenant ainsi la tête (28) de l'élément en forme de tige (20) à repousser le moyen à manchon (24) contre le ressort à boudin (26, 26a, 26b) et à le faire avancer en direction de la seconde surface de la pièce.

8. Ensemble selon la revendication 7, caractérisé en ce que l'élément en forme de tige (20) coopère par glissement avec ledit moyen expanseur (22) de manière que ledit élément en forme de tige puisse être tiré et provoquer ladite avance.

9. Ensemble selon la revendication 7, caractérisé en ce que ledit élément en forme de tige (20) peut être vissé (filetages 30, 32) dans ledit moyen expanseur (22) de manière que la rotation dudit élément en forme de tige puisse provoquer ladite avance.

10. Ensemble selon la revendication 1 ou 2, caractérisé en ce que l'extrémité du moyen à manchon (24, 124, 160) qui est face à la seconde surface de la pièce comprend une région évidée (52, 151, 161, 163) proche de la partie de queue de l'élément en forme de tige pour faciliter son engagement et son élargissement par la partie de nez conique (44, 144) du moyen expanseur.

11. Ensemble selon la revendication 10, caractérisé en ce que la région évidée est une surface chanfreinée (64).

12. Ensemble selon la revendication 10, caractérisé en ce que la région évidée (52, 151, 161) est une partie contre-alésée dans le moyen à manchon (24, 124, 160).

13. Ensemble selon la revendication 12, caractérisé en ce que l'extrémité du moyen à manchon (24, 124) qui comprend la région contre-alésée comporte une surface chanfreinée (154).

14. Ensemble selon la revendication 10, caractérisé en ce que le moyen à manchon (124, 160) comprend une région (152) de diamètre extérieur plus important autour de sa région comportant les filetages (131, 162) qui coopèrent avec l'élément en forme de tige (120).

15. Ensemble selon la revendication 1, caractérisé en ce que l'élément en forme de tige comprend en outre une seconde gorge (49) dans sa partie de queue (37), conçue pour se briser sous une charge prédéterminée.

FIG. 1

FIG. 2

FIG. 3

FIG. 4

0 084 641

FIG. 5

FIG. 6

FIG. 7    FIG. 8    FIG. 9

FIG. 10    FIG. 11

2

FIG. 12

FIG. 13

FIG. 14

FIG. 16

FIG. 15

3